# FASCICULE DE BREVET EUROPEEN

(11) **EP 4 305 323 B1**
(45) Date de publication et mention de la délivrance du brevet: **02.04.2025**
(21) Numéro de dépôt: 22708963.8
(22) Date de dépôt: 03.03.2022
(51) Int. Cl.: F16D 13/64, F16D 65/12, F16D 65/00

(54) **SEGMENT DE GARNITURE DE FRICTION**
REIBBELAGSEGMENT
FRICTION LINING SEGMENT

(30) Priorité: 10.03.2021 FR 2102333
(43) Date de publication de la demande: 17.01.2024
(73) Titulaire: Valeo Matériaux de Friction, 87020 Limoges (FR)
(72) Inventeur: ALIX, Isabelle, 87020 Limoges (FR); GARESTIER, Guillaume, 87020 Limoges (FR); DUNO, Erick, 87020 Limoges (FR); VERGNAUD, Aurelien, 87020 Limoges (FR); RAINAUD, Jean Francois, 87020 Limoges (FR); AUTEF, Alexandre, 87020 Limoges (FR)
(74) Mandataire: Valeo Powertrain Systems
(86) Numéro de dépôt international: PCT/EP2022/055461
(87) Numéro de publication internationale: WO 2022/189264

(56) Documents cités:
- EP-A2- 1 457 697
- US-A- 5 332 075

## Description

La présente invention porte sur un segment de garniture de friction pour une garniture de friction humide segmentée, notamment pour embrayage par exemple de véhicules automobiles, tels que les véhicules de tourisme ou les véhicules industriels. L'invention concerne également une garniture de friction comprenant au moins deux segments de garniture de friction contigus et un disque de friction comprenant un support avec au moins une garniture de friction selon l'invention.

L'invention trouve des applications dans le domaine des gamitures de friction ou frottement humide (« wet » selon la terminologie anglaise). Les garnitures de friction humide sont utilisées lorsque le matériau de friction est « mouillé » ou imprégné d'un liquide tel que l'huile pendant l'utilisation, par exemple le liquide de frein ou le liquide de transmission automatique. Les garnitures de friction humides sont très différentes tant par leur composition que par leurs caractéristiques physiques des garnitures de friction à sec (« dry » selon la terminologie anglaise).

Généralement, un disque de friction, par exemple en acier, porte sur chacune de ses faces frontales une garniture de friction. Les garnitures de friction sont typiquement découpées en tant qu'une seule pièce annulaire à partir de rouleaux continus de matériau de friction ou de papier imprégné d'une résine qui est alimenté par une presse à découper. Afin d'économiser de la matière, il a ensuite été proposé de composer ces garnitures de friction à partir d'une pluralité de segments de garniture de friction.

Des segments de garnitures de friction sont par exemple divulgués dans les demandes EP 1 457 697 A2, EP 0 622 558 A1 et EP 0 141 379 A2.

Cependant, ces documents sont muets concernant la fabrication de segments de faible largeur de piste pour une garniture de friction humide segmentée.

La présente invention a donc pour objectif de pallier un ou plusieurs des inconvénients de l'art antérieur en proposant un segment de garniture de friction pour une garniture de friction humide segmenté comprenant un mécanisme de verrouillage et de contre-verrouillage conçu pour permettre à une garniture de friction de faible largeur de piste de conserver sa forme annulaire par les contraintes générées lors de son assemblage.

La présente invention vise ainsi à proposer, selon la revendication 1, un segment de garniture de friction pour une garniture de friction humide segmentée notamment pour embrayage, comprenant :
- un élément de verrouillage sous forme de languette présentant une tête et un cou, ledit élément étant disposé du côté d'une extrémité du segment et
- un élément de verrouillage conjugué sous forme d'encoche disposé du côté de l'autre extrémité dudit segment,
dans lequel ledit segment a une largeur de piste comprise entre 7 et 14 mm, une épaisseur comprise entre 300 et 1200 µm et une teneur en résine phénolique comprise entre 20 et 45% en poids, et dans lequel l'encoche est entourée de part et d'autre de parois dont la largeur est variable, la largeur minimale étant comprise entre 2 et 3 mm.

L'invention permet ainsi, par la combinaison des différentes caractéristiques d'obtenir un segment de garniture de friction de faible largeur de piste avec une robustesse améliorée qui permet d'assurer un bon emboitement entre les différents segments lors la fabrication d'une garniture de friction humide.

L'invention a également pour objet, selon la revendication 7, une garniture de friction comprenant au moins deux segments de garniture de friction contigus, chaque élément de verrouillage d'un segment étant positionné à l'intérieur de l'élément de verrouillage conjugué d'un segment de garniture contigu.

L'invention a également pour objet, selon la revendication 9, un disque de friction comprenant un support avec au moins une garniture de friction selon la présente invention, ladite garniture étant disposée sur au moins une face frontale du support.

Enfin, l'invention a aussi pour objet, selon la revendication 10, un composant de synchronisation de vitesse pour groupe motopropulseur de véhicule comprenant un disque de friction selon la présente invention, le composant étant l'un d'un embrayage, d'un frein, d'un limiteur de couple, d'un convertisseur de couple et d'un synchroniseur de boîte de vitesses, en particulier les boites de vitesses à double embrayage.

L'invention sera mieux comprise à la lecture de la description qui suit et à l'examen des figures qui l'accompagnent. Ces figures ne sont données qu'à titre illustratif mais nullement limitatif de l'invention.
[Fig. 1] représente une vue de dessus d'une garniture de friction humide segmentée à partir de plusieurs segments de garniture de friction selon un premier mode de réalisation.
[Fig. 2] représente une vue de dessus d'un segment de la garniture de friction de la figure 1.
[Fig. 3] représente une vue de dessus partielle montrant un élément de verrouillage et un élément de verrouillage conjugué dans une position séparée.
[Fig. 4] représente une vue de dessus d'un segment de la garniture de friction selon un deuxième mode de réalisation.
[Fig. 5] représente une vue de dessus d'un segment de la garniture de friction selon un troisième mode de réalisation.

Les éléments identiques, similaires ou analogues conservent la même référence d'une figure à l'autre.

Dans la description et les revendications, on utilise les termes « externe » et « interne », ou « extérieur » et « intérieur » ainsi que les orientations « axiale » et « radiale » pour désigner, selon les définitions données dans la description, des éléments de la garniture de friction humide segmentée. Par convention, l'orientation « radiale » est dirigée orthogonalement à l'axe principal de révolution de la gamiture de friction déterminant l'orientation « axiale » et, de l'intérieur vers l'extérieur en s'éloignant dudit axe.

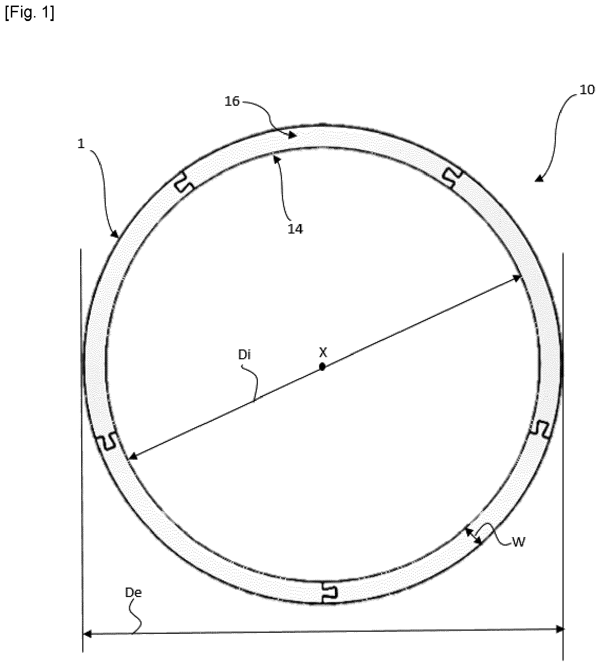

La figure 1 illustre une garniture de friction humide segmentée 10 comprenant au moins deux segments de garniture de friction 1 contigus.

Selon l'exemple considéré, la garniture de friction 10 comprend cinq segments individuels contigus. En variante, un nombre plus ou moins élevé de segments de garniture de friction 1 peut être utilisé. Avantageusement une garniture de friction humide segmentée 10 comprend entre 2 et 10 segments de garniture 1, de manière encore plus avantageuse entre 3 et 6.

La garniture de friction 10 est de forme annulaire plate en un matériau de friction délimitée par des surfaces cylindriques intérieure, de diamètre noté Di, et extérieure, de diamètre noté De et d'axe principal de révolution X Typiquement, la garniture de friction 10 comprend une face de fixation 14, en regard d'une face frontale d'un support de disque de friction (non représenté ici) et une face de frottement 16 plane opposée à la face de fixation 14 et apte à venir en contact avec un contre-matériau pour transmettre le couple moteur.

Typiquement, le support du disque de friction est choisi parmi un support métallique par exemple en acier, une structure tissée à base de fibres organiques sur un support plan et un support papier à base de fibres organiques. Les fibres organiques sont choisies parmi les fibres de cellulose (coton, lin, chanvre, fibres de bois), aramide et carbone.

Chaque segment de garniture de friction 1 pour gamiture de friction humide segmentée 10, comprend un élément de verrouillage 2 du côté d'une extrémité du segment et un élément de verrouillage conjugué 3 du côté de l'autre extrémité dudit segment, c'est-à-dire à l'extrémité opposée.

En se référant aux figures 1 à 4, l'élément de verrouillage 2 est sous forme de languette présentant une tête 2a et un cou 2b et l'élément de verrouillage conjugué 3 est sous forme d'encoche. Avantageusement, la tête 2a s'étend depuis le cou 2b jusqu'à une périphérie 21 opposée au cou 2b. La tête 2a est donc délimitée par le cou 2b à une extrémité et par la périphérie 21 à l'autre extrémité.

Chaque élément de verrouillage 2 d'un premier segment de garniture 1 est complémentaire d'un élément de verrouillage conjugué 3 d'un deuxième segment de garniture 1 qui lui fait face. Comme cela est représenté sur la figure 1, chaque élément de verrouillage 2 d'un segment 1 est positionné à l'intérieur de l'élément de verrouillage conjugué 3 d'un segment de garniture contigu.

Avantageusement, l'élément de verrouillage 2 et l'élément de verrouillage conjugué 3 forment ensemble une liaison mécanique du type queue-d'aronde.

Le segment de garniture de friction 1 selon la présente invention présente une largeur de piste W étroite c'est à dire comprise entre 7 et 14 mm. En d'autres termes, la moitié de la différence entre le diamètre extérieur De et le diamètre intérieurDi d'une garniture de friction fabriquée à partir desdits segments de garniture 1 est compris entre 7 et 14 mm.

Le segment de garniture de friction 1 selon la présente invention présente une épaisseur définie comme la dimension du matériau selon un axe orthogonal à la face de frottement 16 comprise entre 300 et 1200 µm.

Chaque élément de verrouillage conjuguée 3, appelée également encoche, est entourée de part et d'autre de parois 3a. Ce sont ces parois 3a qui forment l'encoche 3. Les parois 3a présentent une largeur T variable. La largeur T est mesurable radialement et la largeur minimale est comprise entre 2 et 3 mm. Pour que ces parois ne se déforment pas lors de leur fabrication, elles doivent disposer d'une rigidité suffisant et durable. Cette rigidité est donnée par une épaisseur minimale de 2 mm.

Dans les exemples considérés, la largeur T de chaque paroi 3a entourant radialement de part et d'autre l'encoche 3 augmente lorsque l'on se rapproche de la périphérie 31 de l'extrémité du segment 1 sur laquelle est disposée l'encoche 3.

Avantageusement, la largeur de la tête 2a de l'élément de verrouillage 2 augmente dans la direction opposée au cou 2b. En d'autres termes, la largeur de la tête 2a augmente lorsque l'on s'éloigne du cou 2b et que l'on se rapproche de la périphérie 21. En effet, comme cela est visible sur les figures 1 à 4, la largeur H au niveau de la périphérie 21 située à l'opposé du cou 2b est supérieure à la largeur N définissant le cou 2b.

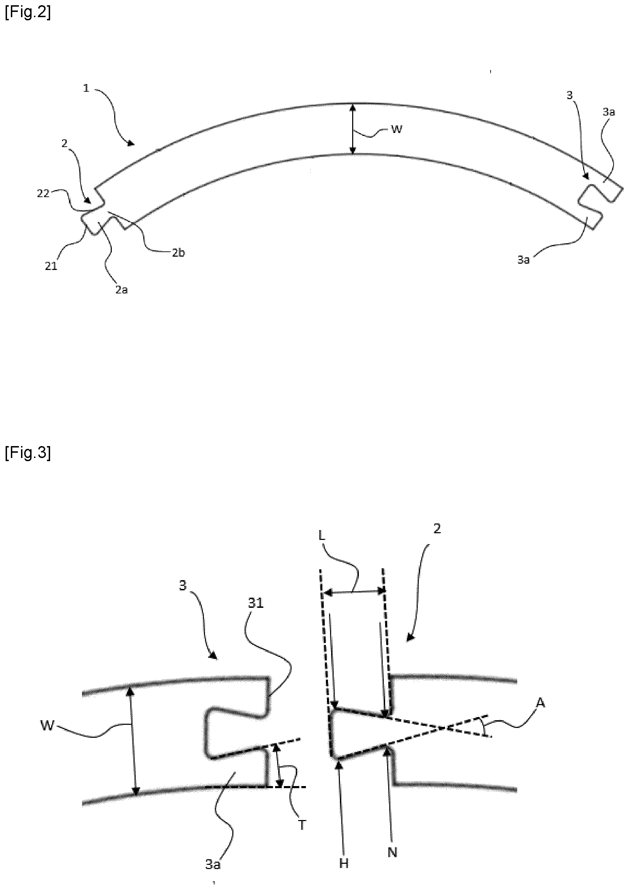

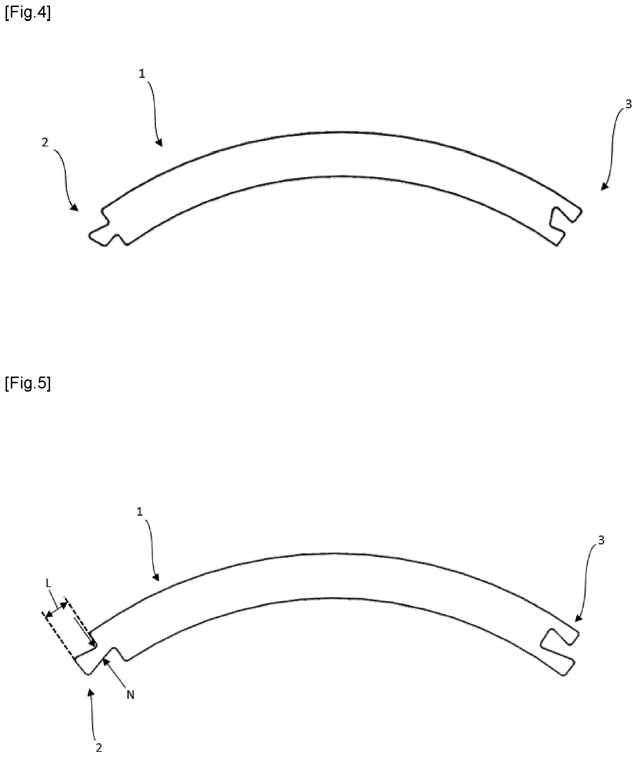

De préférence, la largeur N du cou 2b est comprise entre 2 et 3 mm. La largeur N du cou 2b correspond à la plus petite largeur de la languette (voir figures 3 et 5)

Avantageusement, la tête 2a de l'élément de verrouillage 2 présente des cotés 22 définissant un angle A à leur intersection de moins de 35°, de préférence de moins de 25°. Les cotés 22 relient le cou 2b à la périphérie de la tête 21.

Avantageusement, la tête 2a s'étend depuis le cou 2b de l'élément de verrouillage 2 jusqu'à la périphérie 21 opposée au cou 2b sur une distance L comprise entre 5 et 15 mm.

La distance
Avantageusement, pour chaque segment de garniture de friction 1, l'équation suivante est vérifiée : Tan (A/2) = k ((W-2T-N)/2L)
Tan étant la tangente de l'angle A/2 et k un coefficient compris 0,9 et 1,1.

Des exemples de dimension sont donnés dans le tableau 1 suivant pour trois segments de garniture de friction 1 de largeur de piste différente (les dimensions sont toutes données en mm, sauf pour l'angle A en °).

**[Table. 1]**

| | Largeur de piste | | |
|---|---|---|---|
| | 14 | 10 | 7 |
| T | 4 | 2,50 | 2,00 |
| N | 3,00 3,00 | 3,00 3,00 | 2,00 |
| H | 7,00 | 5,00 | 3,00 |
| L | 10,00 | 7,00 | 6,00 |
| A° | 23 | 16 | 10 |

Dans le cadre de la présente invention, chaque segment de gamiture de friction 1 pour une garniture de friction humide segmentée 10 a une teneur en résine phénolique comprise entre 20 et 45% en poids. Cette teneur est un bon compromis pour que le segment 1 ne soit ni trop rigide ni trop fragile.

Avantageusement, chaque segment de garniture de friction 1 comprend entre 55 et 80% de charges en poids.

Avantageusement, les charges sont choisies parmi les fibres de carbone, de coton, d'aramide, la poudre de charbon actif, la poudre de terres de diatomées et leurs mélanges. Un exemple de composition de segment de garniture de friction 1 est donné dans le tableau 2 suivant (les pourcentages exprimés étant des pourcentages en poids).

**[Table. 2]**

| | |
|---|---|
| **Résine phénolique** | **20 à 45%** |
| **Fibres de carbone** | **2 à 15%** |
| **Fibres de coton** | **5 à 10%** |
| **Fibres d'aramide** | **15 à 40%** |
| **Poudre de charbon actif** | **0 à 15%** |
| **Poudre de terres de diatomées** | **5 à 35%** |

Bien entendu, la description qui précède a été donnée à titre d'exemple uniquement et ne limite pas le domaine de l'invention dont on ne sortirait pas en remplaçant les différents éléments.

## Revendications

1. Segment de garniture de friction (1) pour une gamiture de friction humide segmentée (10) notamment pour embrayage, comprenant :
- un élément de verrouillage (2) sous forme de languette présentant une tête (2a) et un cou (2b), ledit élément (2) étant disposé du côté d'une extrémité du segment et
- un élément de verrouillage conjugué (3) sous forme d'encoche disposé du côté de l'autre extrémité dudit segment,
**caractérisé en ce que** ledit segment (1) a une largeur de piste (W) comprise entre 7 et 14 mm, une épaisseur comprise entre 300 et 1200 µm et une teneur en résine phénolique comprise entre 20 et 45% en poids, et
dans lequel l'encoche (3) est entourée de part et d'autre de parois (3a) dont la largeur (T) est variable, la largeur (T) minimale étant comprise entre 2 et 3 mm.

2. Segment de garniture de friction (1) selon la revendication précédente, **caractérisé en ce que** la largeur de la tête (2a) de l'élément de verrouillage (2) augmente dans la direction opposée au cou (2b).

3. Segment de garniture de friction (1) selon l'une quelconques des revendications précédentes, **caractérisé en ce que** la tête (2a) de l'élément de verrouillage (2) présente des cotés 22 définissant un angle (A) à leur intersection de moins de 35°.

4. Segment de garniture de friction (1) selon l'une quelconques des revendications précédentes, **caractérisé en ce que** la tête (2a) s'étend depuis le cou (2b) de l'élément de verrouillage (2) jusqu'à une périphérie (21) opposée au cou (2b) sur une distance (L) comprise entre 5 et 15 mm.

5. Segment de garniture de friction (1) selon l'une quelconques des revendications précédentes, **caractérisé en ce qu'**il comprend entre 55 et 80% de charges en poids.

6. Segment de garniture de friction (1) selon la revendication précédente, **caractérisé en ce que** les charges sont choisies parmi les fibres de carbone, de coton, d'aramide, la poudre de charbon actif, la poudre de terres de diatomées et leurs mélanges.

7. Garniture de friction (10) comprenant au moins deuxsegments de garniture de friction (1) contigus selon l'une quelconque des revendications précédentes, chaque élément de verrouillage (2) d'un segment (1) étant positionné à l'intérieur de l'élément de verrouillage conjugué (3) d'un segment de garniture contigu.

8. Garniture de friction (10) selon la revendication précédente, **caractérisé en ce que** l'élément de verrouillage (2) et l'élément de verrouillage conjugué (3) forment ensemble une liaison mécanique du type queue-d'aronde.

9. Disque de friction comprenant un support avec au moins une garniture de friction (10) selon l'une quelconque des revendications 7 ou 8, ladite garniture étant disposée sur au moins une face frontale du support.

10. Composant de synchronisation de vitesse pour groupe motopropulseur de véhicule comprenant un disque de friction selon la revendication précédente, le composant étant l'un d'un embrayage, d'un frein, d'un limiteur de couple, d'un convertisseur de couple et d'un synchroniseurde boîte de vitesses, en particulier les boites de vitesses à double embrayage.

## Patentansprüche

1. Reibbelagsegment (1) für einen segmentierten Nass-Reibbelag (10), insbesondere für eine Kupplung, das Folgendes aufweist:
- ein Verriegelungselement (2) in Form einer Zunge mit einem Kopf (2a) und einem Hals (2b), wobei das Element (2) auf der Seite eines Endes des Segments angeordnet ist, und
- ein Gegenverriegelungselement (3) in Form einer Kerbe, das auf der Seite des anderen Endes des Segments angeordnet ist,
**dadurch gekennzeichnet, dass** das Segment (1) eine Bahnbreite (W) zwischen 7 und 14 mm, eine Dicke zwischen 300 und 1200 µm und einen Phenolharzgehalt zwischen 20 und 45 Gew.-% aufweist, und
wobei die Kerbe (3) auf beiden Seiten von Wänden (3a) umgeben ist, deren Breite (T) variabel ist, wobei die minimale Breite (T) zwischen 2 und 3 mm liegt.

2. Reibbelagsegment (1) nach dem vorhergehenden Anspruch, **dadurch gekennzeichnet, dass** die Breite des Kopfes (2a) des Verriegelungselements (2) in der dem Hals (2b) entgegengesetzten Richtung zunimmt.

3. Reibbelagsegment (1) nach einem der vorhergehenden Ansprüche, **dadurch gekennzeichnet, dass** der Kopf (2a) des Verriegelungselements (2) Seiten 22 aufweist, die an ihrem Schnittpunkt einen Winkel (A) von weniger als 35° definieren.

4. Reibbelagsegment (1) nach einem der vorhergehenden Ansprüche, **dadurch gekennzeichnet, dass** sich der Kopf (2a) von dem Hals (2b) des Verriegelungselements (2) zu einem dem Hals (2b) gegenüberliegenden Umfang (21) über eine Strecke (L) zwischen 5 und 15 mm erstreckt.

5. Reibbelagsegment (1) nach einem der vorhergehenden Ansprüche, **dadurch gekennzeichnet, dass** es zwischen 55 und 80 Gew.-% Füllstoffe aufweist.

6. Reibbelagsegment (1) nach dem vorhergehenden Anspruch, **dadurch gekennzeichnet, dass** die Füllstoffe aus Kohlenstoff-, Baumwoll-, Aramidfasern, Aktivkohlepulver, Diatomeenerdepulver und deren Mischungen ausgewählt sind.

7. Reibbelag (10) mit mindestens zwei aneinandergrenzenden Reibbelagsegmenten (1) nach einem der vorhergehenden Ansprüche, wobei jedes Verriegelungselement (2) eines Segments (1) innerhalb des Gegenverriegelungselements (3) eines aneinandergrenzenden Belagsegments positioniert ist.

8. Reibbelag (10) nach dem vorhergehenden Anspruch, **dadurch gekennzeichnet, dass** das Verriegelungselement (2) und das Gegenverriegelungselement (3) zusammen eine mechanische Verbindung vom Typ Schwalbenschwanz bilden.

9. Reibscheibe mit einem Träger mit mindestens einem Reibbelag (10) nach einem der Ansprüche 7 oder 8, wobei der Belag auf mindestens einer Stirnseite des Trägers angeordnet ist.

10. Komponente zur Drehzahlsynchronisation für einen Fahrzeugantrieb mit einer Reibscheibe nach dem vorhergehenden Anspruch, wobei die Komponente entweder eine Kupplung, eine Bremse, ein Drehmomentbegrenzer, ein Drehmomentwandler oder eine Synchronisiereinrichtung eines Getriebes, insbesondere eines Doppelkupplungsgetriebes, ist.

## Claims

1. Friction lining segment (1) for a segmented wet friction lining (10) in particular for a clutch, comprising:
- a locking element (2) in the form of a tongue with a head (2a) and a neck (2b), said element (2) being positioned on the side of an end of the segment; and
- a mating locking element (3) in the form of a notch positioned on the side of the other end of said segment,
**characterized in that** said segment (1) has a track width (W) of between 7 and 14 mm, a thickness of between 300 and 1,200 µm, and a phenolic resin content of between 20 and 45% by weight, and
wherein the notch (3) is surrounded on both sides by walls (3a) with a variable width (T), the minimal width (T) being between 2 and 3 mm.

2. Friction lining segment (1) according to the preceding claim, **characterized in that** the width of the head (2a) of the locking element (2) increases in the direction opposite the neck (2b).

3. Friction lining segment (1) according to either of the preceding claims, **characterized in that** the head (2a) of the locking element (2) has sides (22) defining an angle (A) at their intersection of less than 35°.

4. Friction lining segment (1) according to any one of the preceding claims, **characterized in that** the head (2a) extends from the neck (2b) of the locking element (2) as far as a periphery (21) opposite the neck (2b) over a distance (L) of between 5 and 15 mm.

5. Friction lining segment (1) according to any one of the preceding claims, **characterized in that** it comprises between 55 and 80% fillers by weight.

6. Friction lining segment (1) according to the preceding claim, **characterized in that** the fillers are selected from amongst fibers of carbon, cotton, aramide, activated carbon powder, or powder of diatomaceous earths and their mixtures.

7. Friction lining (10) comprising at least two contiguous friction lining segments (1) according to any one of the preceding claims, each locking element (2) of a segment (1) being positioned in the interior of the mating locking element (3) of a contiguous lining segment.

8. Friction lining (10) according to the preceding claim, **characterized in that** the locking element (2) and the mating locking element (3) form together a mechanical connection of the dovetail type.

9. Friction disk comprising a support with at least one friction lining (10) according to either of Claims 7 or 8, said lining being positioned on at least a frontal face of the support.

10. Speed synchronization component for a drive train of a vehicle comprising a friction disk according to the preceding claim, the component being one out of a clutch, a brake, a torque limiter, a torque converter and a gearbox synchronizer, in particular for double clutch gearboxes.
